# EUROPEAN PATENT SPECIFICATION

(11) **EP 2 220 842 B1**
(45) Date of publication and mention of the grant of the patent: **13.07.2016**
(21) Application number: 08807887.8
(22) Date of filing: 03.10.2008
(51) Int. Cl.: H04L 29/06

(54) **IP-BASED INTERWORKING METHODS AND APPARATUS FOR VOICE AND DATA COMMUNICATIONS**
INTERWORKINGVERFAHREN UND VORRICHTUNGEN AUF IP-BASIS FÜR SPRACH- UND DATENKOMMUNIKATION
PROCÉDÉS ET APPAREILS D'INTERFONCTIONNEMENT BASÉ SUR IP POUR DES COMMUNICATIONS VOCALES ET DE DONNÉES

(30) Priority: 12.10.2007 US 979633 P; 21.12.2007 US 963116
(43) Date of publication of application: 25.08.2010
(73) Proprietor: Telefonaktiebolaget LM Ericsson (publ), 164 83 Stockholm (SE)
(72) Inventor: ZHU, Zhongwen, Saint-laurent Québec H4R 3H7 (CA)
(74) Representative: Hoffmann Eitle
(86) International application number: PCT/IB2008/054073
(87) International publication number: WO 2009/047686

(56) References cited:
- ZHONGWEN ZHU ED - SHUO-JEN HSU ET AL: "An IMS Based Inter-working Solution for Multimedia Service in a Converged Network" MULTIMEDIA AND UBIQUITOUS ENGINEERING, 2008. MUE 2008. INTERNATIONAL CONFERENCE ON, IEEE, PISCATAWAY, NJ, USA, 24 April 2008 (2008-04-24), pages 19-24, XP031263650 ISBN: 978-0-7695-3134-2
- ANONYMOUS: "Universal Mobile Telecommunications System (UMTS); Signalling interworking between the 3GPP profile of the Session Initiation Protocol (SIP) and non-3GPP SIP usage (3GPP TR 29.962 version 6.1.0 Release 6); ETSI TR 129 962" ETSI STANDARDS, LIS, SOPHIA ANTIPOLIS CEDEX, FRANCE, vol. 3-CN3, no. V6.1.0, 1 September 2003 (2003-09-01), XP014031781 ISSN: 0000-0001
- ZHANG ET AL: "Inter-working between SIMPLE and IMPS" COMPUTER STANDARDS AND INTERFACES, ELSEVIER SEQUOIA. LAUSANNE, CH, vol. 29, no. 5, 22 May 2007 (2007-05-22), pages 584-600, XP022088564 ISSN: 0920-5489

## Description

### Technical field

The present invention generally relates to messaging methods and networks and, more particularly, to methods and networks for providing interworking in voice and data systems.

### Background

In the evolution of traditional telecom network towards a converged next generation network, interworking is always challenging due to different name spaces and routing mechanism across communication networks.

With the help of rapid development in computer and network communication technologies, nowadays, people have more ways to communicate with each other. Instant messaging domain or Voice over Internet Protocol (IP) VoIP domain are some of the most popular Internet domains, which provide voice, instant messaging, etc. A traditional fixed line telephone operator is facing a big challenge from those internet service providers.

Although they do not have to face the same problem as fixed line telephone operators, mobile operators are under the pressure from their competitors, end users, and service/content providers as well as government regulation to open up their private network. Interworking with Instant messaging domain and VoIP domain is considered to be one of the important steps for opening these private networks.

Existing Interworking solutions for allowing access from mobile or fixed telephone networks to Instant messaging domain and VoIP are made at the terminal side and they require mobile phone or personal computer (PC) users to install multiple client-side applications, such as, Google Talk client ™, Skype client ™ or MSN client™, etc. A client-side application is an application program that communicates with an application server and relies for most significant elements of its business logic on a separate piece of software, an application server, typically running on a host computer located nearby in a LAN or at a distance on a WAN or MAN

Internet based communication services, e.g. chat, Instant Messaging, etc., have their own private communities (e.g. Google™, Skype™ or MSN™). Each service often has its own private protocol. Thus a user that whishes to subscribe to services from these communities has to install a client-side application corresponding to these public or private communities.

The prior art document XP 14031781 discloses SIP signalling interworking in the 3GPP standards.

In order to communicate with each other, two subscribers have to register to the same community. Furthermore, they need to install the same client application on their mobile terminal (MT) or PC. If two subscribers have different client applications installed, it is difficult to let one talk to the other and the interworking operation cannot be established.

Installing multiple client applications on a single MT can allow a subscriber to communicate with a plurality of subscribers that are from different communities. Then the user has to make a decision on which client to be used for requesting and establishing the call. This requires that end users shall have certain knowledge on these Internet based communication protocols.

In order to avoid too many client applications running on MT or PC, a solution is required. However, due to the different domain name space and routing mechanism across different applications, it makes the Interworking quite difficult.

Accordingly, it would be desirable to have a solution for interworking between mobile or fixed network and instant messaging domains or VoIP domains in order to avoid the afore-described problems and drawbacks.

### Summary

It is a broad aspect of the invention to provide a method according to claim 1 for call interworking between a first user equipment (UE) and a second UE in an Internet Protocol (IP)-based network. The method comprises the steps of receiving a call request for establishing a call between the first UE and the second UE, the call request including a list of addresses corresponding to the second UE retrieving a list of addresses corre-sponding to the first UE forking the received list of addresses corresponding to the second UE determining, based on a set of rules, which address to be used from the list of addresses corresponding to the first UE and which address to be used from the list of addresses corresponding to the second UE and establishing the call between the first UE and the second UE.

It is another broad aspect of the invention to provide a method according to claim 4 for conference call in-terworking between a first user equipment (UE) and a group of UEs having a plurality of second UEs. The method comprises the steps of receiving a conference call request for establishing a call between the first UE and each one of the plurality of second UEs, the call request including a group identifier for identifying the group of UE, setting up a conference call session, retrieving a list of addresses corresponding to the first UE, querying a database for expanding the group identifier into a list for each one of the plurality of second UEs, forking the received list of addresses corresponding to each the second UE, determining, based on a set of rules, which address to be used from the list of addresses corresponding to the first UE and which address to be used from the list of addresses corresponding to the second UE and establishing the call between the first UE and each second UE.

It is another broad aspect of the invention to provide an application server according to claim 10 (AS) for establishing a call between a first UE and a second UE. For doing so, the AS comprises an application part for receiving a call request for establishing a call between the first UE and the second UE, the call request including a list of addresses corresponding to the second UE and retrieving a list of addresses corresponding to the first UE and forking the received list of addresses corresponding to the second UE. The application part further interacts with a business logic for forking the received list of addresses corresponding to the second UE and determining, based on a set of rules stored in the application part, which address to be used from the list of addresses corresponding to the first UE and which address to be used from the list of addresses corresponding to the second UE for establishing the call.

It is another broad aspect of the invention to provide an application server according to claim 12 (AS) for establishing a conference call between a first UE and a group of UEs having a plurality of second UEs. For doing so, the AS comprises an application part for receiving a conference call request for establishing a call between the first UE and each one of the plurality of second UEs, the call request including a list of addresses corresponding to the second UE, a group identifier for identifying the group of UEs, setting up a conference call session, retrieving a list of addresses corresponding to the first UE; querying a database for expanding the group identifier into a list for each one of the plurality of second UEs. The application part further interacts with a business logic for forking the received list corresponding to each one of the plurality of second UEs and determining, based on a set of rules stored in the application part, which address to be used from the list of addresses corresponding to the first UE and which address to be used from the list of addresses corresponding to each of the second UE for establishing the call.

It is further disclosed to provide a An Interworking Function (IWF) gateway for call interworking between a domain of a first UE and at least one second UE. The IWF gateway comprises service client applications for subscribing on behalf of the first UE to a user account in the domain of the at least one second UE. The IWF gateway then establishes the call between the first UE and at least one second UE through the proxy of the domain of the at least one second UE.

### Brief Description of the Drawings

The foregoing and other aspects, features, and advantages of the invention will be apparent from the following more particularly detailed description as illustrated in the accompanying drawings in which reference characters refer to the same parts throughout the various views. The drawings are not necessarily to scale, emphasis instead being placed upon illustrating the principles of the invention.
Figure 1 is a schematic diagram illustrating an IP-based Interworking network in accordance to the invention;
Figure 2 is a schematic diagram illustrating a variant of an IMS-based Interworking network in accordance to the invention;
Figure 3 is an example of a list of a sender or a receiver in accordance to the invention;
Figure 4 is a flow chart of a method for establishing a call between UEs in accordance to the invention;
Figure 5 is a flow chart of a method for establishing a conference call between a group of UEs in accordance to the invention.

### Detailed Description

In the following description, for purposes of explanation and not limitation, specific details are set forth such as particular architectures, interfaces, techniques. In order to provide a thorough understanding of the present invention. However, it will be apparent to those skilled in the art that the present invention may be practiced in other embodiments that depart from these specific details. In other instances, detailed descriptions of well known devices, circuits, and methods are omitted so as not to obscure the description of the present invention with unnecessary detail.

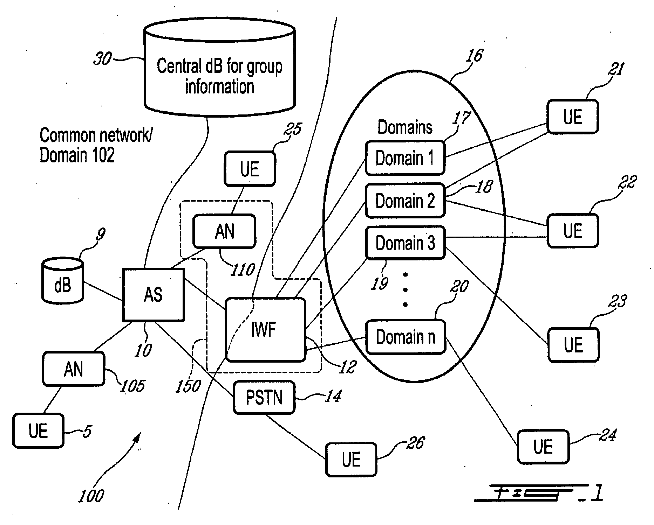

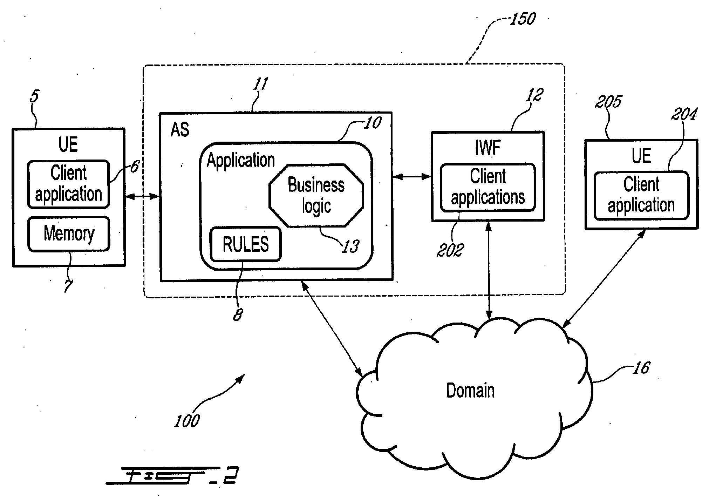

Reference is now made to Figure 1, which is a schematic diagram illustrating an IP-based network 100 in accordance to the invention. The network 100 and comprise a domain 102 depicted on Figure 1 that can be an Internet Protocol (IP) Multimedia Subsystem (IMS), Instant messaging domain or any packet data network. The network 100 provides packet data services to a UE 5 and multiple domains 16, which use different communication protocols as the communication protocol used in the network 100. The UE 5 can be any mobile equipment or fixed personal computer (PC) that is adapted to receive and send packet data services from and to the network 100 described in Figures 1 and 2. This enables the user of the UE 5 to communicate with any of the UEs 21, 22, 23, 24, 25 and 26, who may have same or different communication domains. In Figure 1, UE 5 is located in its domain 102, but for requesting similar services as provided in its home network 102. The services can be for example Messaging over IP (MoIP), Multimedia Messaging Service (MMS) and Instant Messaging (IM).

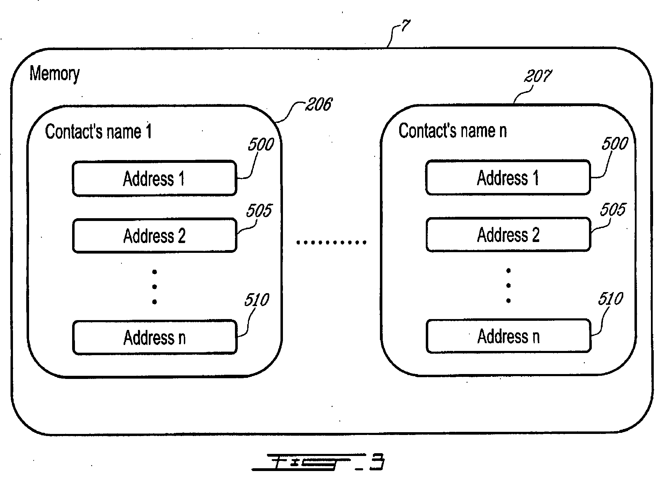

The UE 5 comprises a client application for accessing the domain 102 and a memory 7 for storing list 206 and 207 of contacts having contacts' address and contacts' information of UEs from same or different domains. The memory 7 may be any persistent memory or volatile memory like a Read-Only Memory (ROM), a Structured Query Language (SQL) database or a Flash memory. Figure 3, which illustrates a memory containing a contact listing stored at the UE 5, shows only 2 lists of addresses for contacts. However, the invention is not limited to the number of addresses and list depicted on Figures 1 and 2. The client application 6 can be any software application, hardware or any combination thereto for accessing the IP-based network 100. The client 6 may be for example, a (VoIP) Voice over IP client, a Multimedia Messaging (MMS) client or Instant Messaging and Presence Services (IMPS) client. Each list may contain the information attached to an identifier such as the name given by the UE 5 to each UE (e.g. UEs 21 to 25). The list 206 or 207 may contain addresses (address 1, address 2... address n), while not being limited to the number shown on Figure 3, corresponding to a domain of an end user (e.g. 21, 22, 23, 24, 25 or 26). The addresses can be, for example in the following format: domain 1: userA@domain1.com, xmpp: userA@domain2.com, sip: userA@sipserver.com, Tel: 1514234567 and VoIP: userA.lastname.

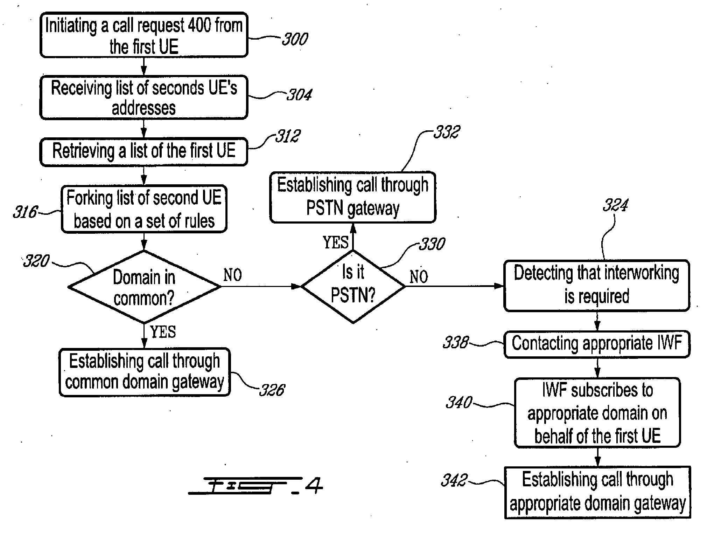

Reference is now made to Figure 2, which is a schematic diagram illustrating a simplified network 100 of the IP-based Interworking network of Figure 1 in accordance to the invention and to Figure 4 is a flow chart of a method for establishing a call between UE 5 and a UE 205 in accordance to the invention. When the user of the UE 5 requests a call set up establishing a call with the UE 205, which can be at least one of the UEs 21, 22, 23, 24, 25 and 26, the user uses the client application 6 for sending out a call request 400 including the list of recipient's address 206 to an application 10 running on an AS 11. At step 300, the user of UE 5 initiates the call using an identifier (contact's name) of UE 205 and sends the call request 400 to the AS 11 for establishing the call with UE 205. The UE 205 comprises at least one client application 204 for operating the UE 205 in one of the proxy domains 16. The AS 11 comprises business logic 13 and which interacts with an application part 10 for applying a set of rules during a forking operation. The application part further operates the AS 11 and receives/sends messages sent from and to the UE5 or any UE similar as UE 5. The application part also establishes calls for the UE or any UE requesting a call set up through the AS 11.

The call request 400 includes necessary parameters (e.g. credentials), and the list 206 of addresses corresponding to the called or terminating UE 205 (step 304). Then at step 300, the UE 5 is not required to select which address to be used for communicating with the called UE 205. For doing so, the AS 11 further retrieves a list of addresses corresponding to the UE 5 to a user database (dB) 9, which stores user data and billing information (step 312). The dB 9 may be any volatile, persistent or permanent memory such as a file system for storing user's information data. Alternatively, the list of addresses corresponding to the UE 5 can be sent to along with the call request message 400. Then the application part 10 on the AS 11 may alternatively retrieve the list of addresses of UE 5 from the call request message 400.

When receiving the call request 400, the application 10 on AS 11 forks the list 206 of the recipient's addresses sent from the UE 5 (step 316). The forking operation, at step 316 can be done in a sequential order, simultaneously or based on a set of rules for addresses 500, 505 and 510 in list 206. The set of rules 8 can be determined by the UE 5 and thus based, while not being limited to, on preferences such as using an address or domain where the cost is the lowest for the user of UE 5 or where the Quality-of-Service (QoS) respects a certain threshold determined in the UE 5 profile stored in dB 9. The business logic 13 interacts with the application part 10 for applying these rules, at step 316. The forking operation ultimately determines an appropriate address and further a domain 16 for establishing the call. The application part on the AS 11 then compares the retrieved list of addresses corresponding to the UE 5 and the list 206 of addresses corresponding to the called UE 205 and determines whether the UE 5 and UE 205 belong to the same domain 102 (step 320). If it is the case, the call is established by the AS 11 between the UE 5 and the UE 205 through the access node (AN) 105, the common domain gateway (e.g. AS 11) and the AN 110 (step 326).

If at step 320 the AS 11 determines that the UE 5 and UE 205 are from different domains, the AS 11 determines whether the UE 205 is from a Public Switching Telephone Network (PSTN) domain (step 330). If it is the case, the call is established using the PSTN gateway 14 (step 332). However, if the UE 205 is not from a PSTN domain, the AS 11 determines that interworking is required for establishing the call between the UE 5 and the UE 205 (step 334). After determining that interworking is required, the AS 11 contacts an Interworking Function (IWF) 12 (step 338). The IWF 12 selects an appropriate domain (e.g. Domain 17, 18, 19 or 20) between the UE 5 and the UE 205. The IWF 12 then uses one of the client applications 202 for contacting the appropriate domain proxy 16 and for subscribing to a user account to the appropriate of domains 16 (e.g. Domain 17, 18, 19 or 20) on behalf of the UE 5 (step 340). The client applications 202 in the IWF 12 may be updated when a new domain is added or discovered by the IWF 12. The application 10 in AS 11 sends a request message towards domains 16, which eventually setup a voice connection with the UE 205 on behalf of the UE 5. This is done by IWF 12 via one of the proxy domain 16. Then the IWF 12 sets up the voice connection or data connection to the recipient via one of the proxy domains 16. When the positive response is received, the IWF 12 proxies the response back to the AS 11 and the call is established (step 342). The different communication nodes (e.g. AS 11, AN 11 and 105 and 110, IWF 12, proxy domains 16 and UEs 5, 21, 22, 23, 24, 25 and 26) can be wirelessly connected (e.g. Bluetooth or any radio protocol transmission) or connected through a wired connection. The IWF 12 and the proxy domains 16 can be any IMS gateway, MMS gateway, etc., for interacting with the network 100 and the different proxy domains 16. The IWF 12 can be further collocated to the AS 11 in communication node 150 and thus combining their functionalities (interworking and call establishment).

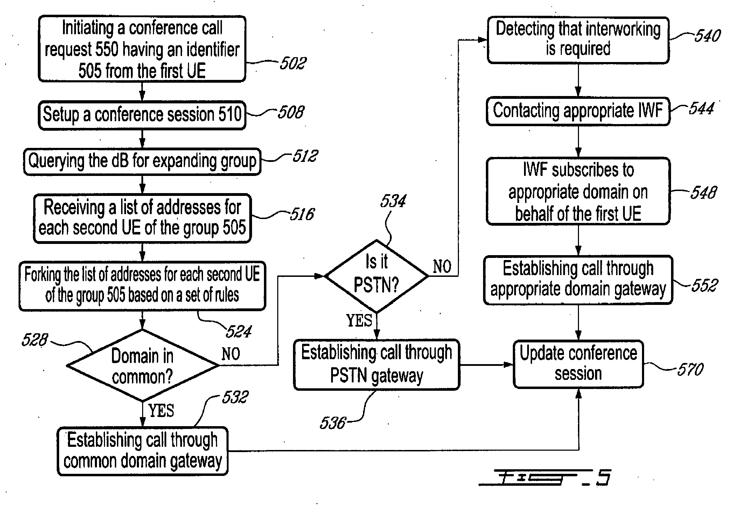

Alternatively a user of the UE 5 may decide to initiate a conference call request 500 to a group of UEs similar as the UEs illustrated on Figure 1 for establishing a conference call. Reference is now made to Figure 5, which is a flow chart of a method for establishing a conference call between UE 5 and a plurality of UEs capable of receiving services from the communication network 100 as described in Figure 1 and in accordance to the invention. The UE 5, then acts as a conference organizer for a conference call. Then, at step 502, the user of UE 5 initiates the conference call 500 with a group of UEs (e.g. UEs 21, 22, 23, 24, 25 or 26). The UE 5 may use predefined group identifiers for in the case that group 505 is a predefined group or service identifiers for ad hoc group in the case that that the group 505 of UE is an ad hoc for initiating the conference call. The UE 5 sends the call request from the client application 6 to the AS 11 for establishing the conference call with the group 505 of UEs. The conference call request 550 sent to the application 10 includes predefined group identifiers or service identifiers. Upon reception of the conference call request 550, the AS 11, sets up a conference call session 510 in order to receive updates and status for each member of group 505 (e.g. UE form the group 505) (step 508). The UE 5 then queries a Central dB 30 containing group information (step 512). The AS 11 thus retrieves a list for each member of group 505 (step 516).

Then the application 10 on AS 11 forks each list (e.g. 206 and 207) sent from the UE 5 (step 524). The forking operation, at step 524 can be done in a sequential order, simultaneously or based on a set of rules 8 for addresses 500, 505 and 510 in list 206 and 207. The set of rules 8 can be determined by the UE 5 and thus based on preferences such as using an address or domain where the cost is the lowest for the user of UE 5 or where the Quality-of-Service (QoS) respects a certain threshold determined in the UE 5 profile stored in dB 9. The business logic 13 interacts with the application part 10 for applying these rules 8, at step 524. The forking operation ultimately determines an appropriate address and further a domain 16 for establishing the call for each list and thus for each member of group 505. The AS 11 then compares the retrieved list of addresses corresponding to the UE 5 and the list 206 of addresses corresponding to each called UE in the group 505 and determines for each UE whether a member of group 505 belongs to the same domain 102 (step 528). If it is the case, the conference call is established between the UE 5 and a UE from the same domain 102. The conference call with the member of the group is established through the access node (AN) 105, the common domain gateway (e.g. AS 11) and the AN 110 (step 532). The conference call session 510 is then updated with the status of the call between the UE 5 and the particular member of group 505 from the same domain 102 of UE 5 (step 570).

If at step 528, the AS 11 determines that the UE 5 and a particular member of group 505 are from different domains, the AS 11 determines whether the UE from a different is from a PSTN domain (step 524). If it is the case, the call is established using the PSTN gateway 14 (step 536). The conference call session 510 is then updated with the status of the call between the UE 5 and the particular member of the group 505 from the PSTN (step 570).

However, if the UE is not from a PSTN domain, the AS 11 determines that interworking is required for establishing the call between the UE 5 and that particular UE (step 540). After determining that interworking is required, the AS 11 contacts the IWF 12 (step 544). The IWF 12 selects an appropriate domain (e.g. Domain 17, 18, 19 or 20) between the UE 5 and the UE 205. The IWF 12 then uses one of the client applications 202 for contacting the appropriate domain proxy 16 and for subscribing to a user account to the appropriate of domains 16 (e.g. Domain 17, 18, 19 or 20) on behalf of the UE 5 (step 548). The client applications 202 in the IWF 12 may be updated when a new domain is added or discover by the IWF 12. The application 10 in AS 11 sends a request message towards domains 16, which eventually setup a voice connection with the UE that is from a domain different on the behalf of the UE5. This is done by IWF 12 via one of the proxy domains 16. Then the IWF 12 sets up the voice connection to the recipient via one of the domain proxies 16. When the positive response is received, the IWF 12 proxies the response back to the AS 11 and the call is established (step 552). The conference call session 510 is then updated with the status of the call between the UE 5 and the particular participant from the same domain 102 of UE 5 (step 570).

The step 570 for updating the call session 510 may have a status of 'call established with the requested member of group 505' when the call is established between the UE and an other UE or 'call failed to be established with the requested member of group 505' when the forking operation of step 524 cannot successfully establish an address for a called UE.

The method described in exemplary embodiments can be applied to a plurality of communication protocols. The foregoing description of exemplary embodiments provides illustration and description, but it is not intended to be exhaustive or to limit the invention to the precise form disclosed. For example the method can also be applied for other packet data communication such as Voice over IP or MMS. Therefore, the protocols used for establishing a call and thus for sending messages in the network is an IP-based protocols or Instant messaging protocols or any packet data protocols, while not being limited to, e.g. Session Initiation Protocol (SIP) as defined in the Internet Engineering Task Force (IETF), www.ietf.org Request For Comments (RFCs). Furthermore, the domains 16 may alternatively use the following protocol, while not being limited to, SIMPLE (SIP for Instant Messaging and Presence Leveraging Extensions), APEX (Application Exchange), Prim (Presence and Instant Messaging Protocol), the open XML-based XMPP (Extensible Messaging and Presence Protocol), more commonly known as Jabber and OMA's (Open Mobile Alliance) IMPS (Instant Messaging and Presence Service).

It can be understood that some messages and therefore some parameters sent between communication nodes of the communication network 100 are omitted for clarity reasons. More particularly, it should also be understood that Figures depict a simplified network 100, and that many other communication nodes have been omitted for clarity reasons only. Hence, the network 100 may comprise more than the number of communication nodes present in the Figures.

Modifications and variations are possible in light of the above teachings or may be acquired from practice of the invention. The following claims and their equivalents define the scope of the invention.

## Claims

1. A method for call interworking between a first user equipment UE and a second UE in an Internet Protocol IP-based network, wherein the method comprises the steps of:
- receiving a call request for establishing a call between the first UE and the second UE, the call request including a list of addresses corresponding to the second UE;
- retrieving a list of addresses corresponding to the first UE;
- forking the received list of addresses corresponding to the second UE;
- determining, based on a set of rules, which address to be used from the list of addresses corresponding to the first UE and which address to be used from the list of addresses corresponding to the second UE; and
- establishing the call between the first UE and the second UE.

2. The method of claim 1, wherein the step of determining includes the steps of:
- comparing the list of addresses corresponding to the first UE and the list of addresses corresponding to the second UE;
- detecting that the first UE and the second UE are from a different domain;
- determining that interworking is required for establishing the call between the first UE and the second UE;
- subscribing on behalf of the first UE to a user account in the domain of the second UE; and
- establishing the call between the first UE and the second UE through a proxy of the domain of the second UE.

3. The method of claim 2, wherein the step of comparing includes the steps of:
- detecting that the first UE and the second UE are from a same domain: and
- setting up the call between the first UE and the second UE through a common domain gateway of the same domain.

4. A method for conference call interworking between a first user equipment UE and a group of UEs having a plurality of second UEs, wherein the method comprises the steps of:
- receiving a conference call request for establishing a call between the first UE and each one of the plurality of second UEs, the call request including a group identifier for identifying the group of UEs;
- setting up a conference call session;
- retrieving a list of addresses corresponding to the first UE;
- querying a database for expanding the group identifier into a list for each one of the plurality of second UEs;
- forking the received list of addresses corresponding to each the second UE;
- determining, based on a set of rules, which address to be used from the list of addresses corresponding to the first UE and which address to be used from the list of addresses corresponding to the second UE; and
- establishing the call between the first UE and each second UE.

5. The method of claim 4, wherein the method further comprises a step of updating the conference call session with the status of the second UE.

6. The method of claim 4, wherein the step of determining includes the steps of:
- comparing the list of addresses corresponding to the first UE and the list of addresses corresponding to the second UE;
- detecting that the first UE and the second UE are from a different domain;
- determining that interworking is required for establishing the call between the first UE and the second UE;
- subscribing on behalf of the first UE to a user account in the domain of each second UE; and
- establishing the call between the first UE and each second UE through a proxy of the domain of the second UE.

7. The method of claim 6, wherein the step of comparing includes the steps of:
- detecting for each one of the group of second UEs and the first UE that each one of the group of second UEs and the first UE are from a same domain; and
- setting up the call between the first UE and the each one of the group second UEs through a common domain gateway of the same domain.

8. The method of claim 3 or claim 7, wherein the common domain gateway is an Internet Protocol Multimedia Subsystem IMS gateway.

9. The method of claim 1 or 4, wherein the set of rules includes at least one of the following: Quality of Service QoS and costs level.

10. An application server, AS, for establishing a call between a first User Equipment, UE, and a second UE, the AS comprising:
- an application part for receiving a call request for establishing a call between the first UE and the second UE, the call request including a list of addresses corresponding to the second UE and retrieving a list of addresses corresponding to the first UE and forking the received list of addresses corresponding to the second UE; and
- wherein the application part interacts with a business logic for forking the received list of addresses corresponding to the second UE and determining, based on a set of rules stored in the application part, which address to be used from the list of addresses corresponding to the first UE and which address to be used from the list of addresses corresponding to the second UE for establishing the call.

11. The AS of claim 10, wherein the application part further compares the list of addresses corresponding to the first UE and the list of addresses corresponding to the second UE, detects that the first UE and the second UE are from a different domain; and determines that interworking is required for establishing the call between the first UE and the second UE through an appropriate domain gateway of the second UE.

12. An application server, AS, for establishing a conference call between a first User Equipment, UE, and a group of UEs having a plurality of second UEs, the AS comprising:
- an application part for receiving a conference call request for establishing a call between the first UE and each one of the plurality of second UEs, the call request including a list of addresses corresponding to the second UE, a group identifier for identifying the group of UEs, setting up a conference call session, retrieving a list of addresses corresponding to the first UE; querying a database for expanding the group identifier into a list for each one of the plurality of second UEs; and
- wherein the application part interacts with a business logic for forking the received list corresponding to each one of the plurality of second UEs and determining, based on a set of rules stored in the application part, which address to be used from the list of addresses corresponding to the first UE and which address to be used from the list of addresses corresponding to each of the second UE for establishing the call.

13. The AS of claim 12, wherein the AS updates the conference call session with the status of the second UE when establishing a call between the first UE and each one of the plurality of second UEs.

14. The AS of claim 10 or claim 12, wherein the application part further compares the list of addresses corresponding to the first UE and the list of addresses corresponding to each second UE, detects that the first UE and each second UE are from a different domain; and determines that interworking is required for establishing the call between the first UE and each second UE through an appropriate domain gateway.

15. The AS of claim 12, wherein the set of rules includes at least one of the following: Quality of Service QoS and costs level.

16. The AS of claim 10 or claim 12, wherein the AS is an Internet Protocol Multimedia Subsystem IMS gateway.

## Patentansprüche

1. Verfahren für eine Anruf-Zusammenarbeit zwischen einer ersten Benutzereinrichtung UE und einer zweiten UE in einem Internetprotokoll IP-basierten Netzwerk, wobei das Verfahren die Schritte umfasst zum:
- Empfangen einer Anrufanfrage zum Einrichten eines Anrufs zwischen der ersten UE und der zweiten UE, wobei die Anrufanfrage eine Liste von Adressen entsprechend der zweiten UE enthält;
- Abrufen einer Liste von Adressen entsprechend der ersten UE;
- Aufgabeln der empfangenen Liste von Adressen entsprechend der zweiten UE;
- Bestimmen, basierend auf einem Satz von Regeln, welche Adresse aus der Liste von Adressen entsprechend der ersten UE zu verwenden ist und welche Adresse aus der Liste von Adressen entsprechend der zweiten UE zu verwenden ist; und
- Einrichten des Anrufs zwischen der ersten UE und der zweiten UE.

2. Verfahren nach Anspruch 1, wobei der Schritt zum Bestimmen die Schritte enthält zum:
- Vergleichen der Liste von Adressen entsprechend der ersten UE und der Liste von Adressen entsprechend der zweiten UE;
- Erfassen, dass die erste UE und die zweite UE aus einer unterschiedlichen Domäne sind;
- Bestimmen, dass eine Zusammenarbeit zum Einrichten des Anrufs zwischen der ersten UE und der zweiten UE nötig ist;
- Anmelden an einem Benutzerkonto in der Domäne der zweiten UE im Namen der ersten UE; und
- Einrichten des Anrufs zwischen der ersten UE und der zweiten UE durch einen Proxy der Domäne der zweiten UE.

3. Verfahren nach Anspruch 2, wobei der Schritt zum Vergleichen die Schritte enthält zum:
- Erfassen, dass die erste UE und die zweite UE aus der gleichen Domäne sind; und
- Aufbauen des Anrufs zwischen der ersten UE und der zweiten UE durch ein gemeinsames Domänen-Gateway der gleichen Domäne.

4. Verfahren für eine Konferenzanruf-Zusammenarbeit zwischen einer ersten Benutzereinrichtung UE und einer Gruppe von UEs mit einer Vielzahl von zweiten UEs, wobei das Verfahren die Schritte umfasst zum:
- Empfangen einer Konferenzanruf-Anfrage zum Einrichten eines Anrufs zwischen der ersten UE und jeder der Vielzahl von zweiten UEs, wobei die Anrufanfrage eine Gruppenkennung zum Identifizieren der Gruppe von UEs enthält;
- Aufbauen einer Konferenzanruf-Sitzung;
- Abrufen einer Liste von Adressen entsprechend der ersten UE;
- Abfragen einer Datenbank zum Erweitern der Gruppenkennung in eine Liste für jede der Vielzahl von zweiten UEs;
- Aufgabeln der empfangenen Liste von Adressen entsprechend jeder der zweiten UE;
- Bestimmen, basierend auf einem Satz von Regeln, welche Adresse aus der Liste von Adressen entsprechend der ersten UE zu verwenden ist und welche Adresse aus der Liste von Adressen entsprechend der zweiten UE zu verwenden ist; und
- Einrichten des Anrufs zwischen der ersten UE und jeder zweiten UE.

5. Verfahren nach Anspruch 4, wobei das Verfahren weiterhin einen Schritt zum Aktualisieren der Konferenzanruf-Sitzung mit dem Status der zweiten UE umfasst.

6. Verfahren nach Anspruch 4, wobei der Schritt zum Bestimmen die Schritte enthält zum:
- Vergleichen der Liste von Adressen entsprechend der ersten UE und der Liste von Adressen entsprechend der zweiten UE;
- Erfassen, dass die erste UE und die zweite UE aus einer unterschiedlichen Domäne sind;
- Bestimmen, dass eine Zusammenarbeit zum Einrichten des Anrufs zwischen der ersten UE und der zweiten UE nötig ist;
- Anmelden an einem Benutzerkonto in der Domäne der zweiten UE im Namen der ersten UE; und
- Einrichten des Anrufs zwischen der ersten UE und jeder zweiten UE durch einen Proxy der Domäne der zweiten UE.

7. Verfahren nach Anspruch 6, wobei der Schritt zum Vergleichen den Schritt enthält zum:
- Erfassen für jede aus der Gruppe von zweiten UEs und der ersten UE, dass jeder aus der Gruppe der zweiten UEs und die erste UE aus der gleichen Domäne sind; und
- Aufbauen des Anrufs zwischen der ersten UE und jeder der Gruppe von zweiten UEs durch ein gemeinsames Domänen-Gateway der gleichen Domäne.

8. Verfahren nach Anspruch 3 oder Anspruch 7, wobei das gemeinsame Domänen-Gateway ein Internet-Protokoll-Multimedia-Subsystem IMS Gateway ist.

9. Verfahren nach Anspruch 1 oder 4, wobei der Satz von Regeln zumindest eine der folgenden enthält:
Dienstqualität QoS oder Kostenpegel.

10. Anwendungsserver, AS, zum Einrichten eines Anrufs zwischen einer ersten Benutzereinrichtung, UE, und einer zweiten UE, wobei der AS umfasst:
- einen Anwendungsteil zum Empfangen einer Anrufanfrage zum Einrichten eines Anrufs zwischen der ersten UE und der zweiten UE, wobei die Anrufanfrage eine Liste von Adressen entsprechend der zweiten UE enthält, und Abrufen einer Liste von Adressen entsprechend der ersten UE und Aufgabeln der empfangenen Liste von Adressen entsprechend der zweiten UE; und
wobei der Anwendungsteil mit einer Geschäftslogik interagiert zum Aufgabeln der empfangenen Liste von Adressen entsprechend der zweiten UE und Bestimmen, basierend auf einem Satz von Regeln, die in dem Anwendungsteil gespeichert sind, welche Adresse aus der Liste von Adressen entsprechend der ersten UE zu verwenden ist und welche Adresse aus der Liste von Adressen entsprechend der zweiten UE zu verwenden ist zum Einrichten des Anrufs.

11. Anwendungsserver nach Anspruch 10, wobei der Anwendungsteil weiterhin die Liste von Adressen entsprechend der ersten UE und die Liste von Adressen entsprechend der zweiten UE vergleicht, erfasst, dass die erste UE und die zweite UE aus einer unterschiedlichen Domäne sind; und bestimmt, dass eine Zusammenarbeit zum Einrichten des Anrufs zwischen der ersten UE und der zweiten UE durch ein geeignetes Domänen-Gateway der zweiten UE nötig ist.

12. Anwendungsserver, AS, zum Einrichten eines Konferenzanrufs zwischen einer ersten Benutzereinrichtung, UE, und einer Gruppe von UEs mit einer Vielzahl von zweiten UEs, wobei der AS umfasst:
- einen Anwendungsteil zum Empfangen einer Konferenzanruf-Anfrage zum Einrichten eines Anrufs zwischen der ersten UE und jeder der Vielzahl von zweiten UEs, wobei die Anrufanfrage eine Gruppenkennung zum Identifizieren der Gruppe von UEs enthält, Aufbauen einer Konferenzanruf-Sitzung, Abrufen einer Liste von Adressen entsprechend der ersten UE; Abfragen einer Datenbank zum Erweitern der Gruppenkennung in eine Liste für jede der Vielzahl von zweiten UEs; und
wobei der Anwendungsteil mit einer Geschäftslogik interagiert zum Aufgabeln der empfangenen Liste von Adressen entsprechend jeder der Vielzahl von zweiten UEs und Bestimmen, basierend auf einem Satz von Regeln, die in dem Anwendungsteil gespeichert sind, welche Adresse aus der Liste von Adressen entsprechend der ersten UE zu verwenden ist und welche Adresse aus der Liste von Adressen entsprechend der zweiten UE zu verwenden ist zum Einrichten des Anrufs.

13. AS nach Anspruch 12, wobei der AS die Konferenzanruf-Sitzung mit dem Status der zweiten UE aktualisiert, wenn ein Anruf zwischen der ersten UE und jeder der Vielzahl von zweiten UEs eingerichtet wird.

14. AS nach Anspruch 10 oder 12, wobei der Anwendungsteil weiterhin die Liste von Adressen entsprechend der ersten UE und die Liste von Adressen entsprechend jeder zweiten UE vergleicht, erfasst, dass die erste UE und jede zweite UE aus einer unterschiedlichen Domäne sind; und bestimmt, dass eine Zusammenarbeit zum Einrichten des Anrufs zwischen der ersten UE und jeder zweiten UE durch ein geeignetes Domänen-Gateway der zweiten UE nötig ist.

15. AS nach Anspruch 12, wobei der Satz von Regeln zumindest eine der folgenden enthält: Dienstqualität QoS oder Kostenpegel.

16. AS nach Anspruch 10 oder Anspruch 12, wobei der AS ein Internet-Protokoll-Multimedia-Subsystem IMS Gateway ist.

## Revendications

1. Procédé d'interfonctionnement d'appel entre un premier équipement d'utilisateur, UE, et un deuxième UE dans un réseau basé sur protocole Internet, IP, dans lequel le procédé comprend les étapes de :
- la réception d'une demande d'appel pour établir un appel entre le premier UE et le deuxième UE, la demande d'appel comprenant une liste d'adresses correspondant au deuxième UE ;
- la récupération d'une liste d'adresses correspondant au premier UE ;
- la bifurcation de la liste reçue d'adresses correspondant au deuxième UE ;
- la détermination, sur la base d'un ensemble de règles, de l'adresse à utiliser parmi la liste d'adresses correspondant au premier UE et de l'adresse à utiliser parmi la liste d'adresses correspondant au deuxième UE ; et
- l'établissement de l'appel entre le premier UE et le deuxième UE.

2. Procédé selon la revendication 1, dans lequel l'étape de la détermination comprend les étapes de :
- la comparaison de la liste d'adresses correspondant au premier UE et de la liste d'adresses correspondant au deuxième UE ;
- la détection que le premier UE et le deuxième UE sont de domaine différent ;
- la détermination qu'un interfonctionnement est nécessaire pour établir l'appel entre le premier UE et le deuxième UE ;
- l'abonnement, au nom du premier UE, à un compte d'utilisateur dans le domaine du deuxième UE ; et
- l'établissement de l'appel entre le premier UE et le deuxième UE par l'intermédiaire d'un proxy du domaine du deuxième UE.

3. Procédé selon la revendication 2, dans lequel l'étape de la comparaison comprend les étapes de :
- la détection que le premier UE et le deuxième UE sont d'un même domaine ; et
- l'établissement de l'appel entre le premier UE et le deuxième UE par l'intermédiaire d'une passerelle de domaine commune du même domaine.

4. Procédé d'interfonctionnement d'appel conférence entre un premier équipement d'utilisateur, UE, et un groupe d'UE comportant une pluralité de deuxièmes UE, dans lequel le procédé comprend les étapes de :
- la réception d'une demande d'appel conférence pour établir un appel entre le premier UE et chacun de la pluralité de deuxièmes UE, la demande d'appel comprenant un identifiant de groupe pour identifier le groupe d'UE ;
- la mise en place d'une session d'appel conférence;
- la récupération d'une liste d'adresses correspondant au premier UE ;
- l'interrogation d'une base de données pour l'expansion de l'identifiant de groupe en une liste pour chacun de la pluralité de deuxièmes UE ;
- la bifurcation de la liste reçue d'adresses correspondant à chacun du deuxième UE ;
- la détermination, sur la base d'un ensemble de règles, de l'adresse à utiliser parmi la liste d'adresses correspondant au premier UE et de l'adresse à utiliser parmi la liste d'adresses correspondant au deuxième UE ; et
- l'établissement de l'appel entre le premier UE et chaque deuxième UE.

5. Procédé selon la revendication 4, dans lequel le procédé comprend en outre une étape de mise à jour de la session d'appel conférence avec le statut du deuxième UE.

6. Procédé selon la revendication 4, dans lequel l'étape de la détermination comprend les étapes de :
- la comparaison de la liste d'adresses correspondant au premier UE et de la liste d'adresses correspondant au deuxième UE ;
- la détection que le premier UE et le deuxième UE sont de domaine différent ;
- la détermination qu'un interfonctionnement est nécessaire pour établir l'appel entre le premier UE et le deuxième UE ;
- l'abonnement, au nom du premier UE, à un compte d'utilisateur dans le domaine de chaque deuxième UE ; et
- l'établissement de l'appel entre le premier UE et chaque deuxième UE par l'intermédiaire d'un proxy du domaine du deuxième UE.

7. Procédé selon la revendication 6, dans lequel l'étape de la comparaison comprend les étapes de :
- la détection, pour chacun du groupe de deuxièmes UE et de premier UE, que chacun du groupe de deuxièmes UE et de premier UE sont d'un même domaine ; et
- l'établissement de l'appel entre le premier UE et chacun du groupe de deuxièmes UE par l'intermédiaire d'une passerelle de domaine commune du même domaine.

8. Procédé selon la revendication 3 ou 7, dans lequel la passerelle de domaine commune est une passerelle de sous-système multimédia de protocole Internet, IMS.

9. Procédé selon la revendication 1 ou 4, dans lequel l'ensemble de règles comprend au moins l'un de : une qualité de service, QoS, et un niveau de coûts.

10. Serveur d'application, AS, pour établir un appel entre un premier équipement d'utilisateur, UE, et un deuxième UE, l'AS comprenant :
- une partie d'application pour effectuer la réception d'une demande d'appel pour établir un appel entre le premier UE et le deuxième UE, la demande d'appel comprenant une liste d'adresses correspondant au deuxième UE etla récupération d'une liste d'adresses correspondant au premier UE et la bifurcation de la liste reçue d'adresses correspondant au deuxième UE ; et
- dans lequel la partie d'application est en interaction avec une logique commerciale pour effectuer la bifurcation de la liste reçue d'adresses correspondant au deuxième UE et la détermination, sur la base d'un ensemble de règles mémorisé dans la partie d'application, de l'adresse à utiliser parmi la liste d'adresses correspondant au premier UE et de l'adresse à utiliser parmi la liste d'adresses correspondant au deuxième UE pour l'établissement de l'appel.

11. AS selon la revendication 10, dans lequel la partie d'application effectue en outre : la comparaison de la liste d'adresses correspondant au premier UE et de la liste d'adresses correspondant au deuxième UE ; la détection que le premier UE et le deuxième UE sont de domaine différent ; et la détermination qu'un interfonctionnement est nécessaire pour établir l'appel entre le premier UE et le deuxième UE par l'intermédiaire d'une passerelle de domaine appropriée du deuxième UE.

12. Serveur d'application, AS, pour établir un appel conférence entre un premier équipement d'utilisateur, UE, et un groupe d'UE comportant une pluralité de deuxièmes UE, l'AS comprenant :
- une partie d'application pour effectuer la réception d'une demande d'appel conférence pour établir un appel entre le premier UE et chacun de la pluralité de deuxièmes UE, la demande d'appel comprenant une liste d'adresses correspondant au deuxième UE, et un identifiant de groupe pour identifier le groupe d'UE, la mise en place d'une session d'appel conférence, la récupération d'une liste d'adresses correspondant au premier UE ; et l'interrogation d'une base de données pour l'expansion de l'identifiant de groupe en une liste pour chacun de la pluralité de deuxièmes UE ; et
- dans lequel la partie d'application est en interaction avec une logique commerciale pour effectuer la bifurcation de la liste reçue d'adresses correspondant à chacun de la pluralité de deuxièmes UE et la détermination, sur la base d'un ensemble de règles mémorisé dans la partie d'application, de l'adresse à utiliser parmi la liste d'adresses correspondant au premier UE et de l'adresse à utiliser parmi la liste d'adresses correspondant à chacun des deuxièmes UE pour l'établissement de l'appel.

13. AS selon la revendication 12, dans lequel l'AS effectue la mise à jour de la session d'appel conférence avec le statut du deuxième UE lors de l'établissement d'un appel entre le premier UE et chacun de la pluralité de deuxièmes UE.

14. AS selon la revendication 10 ou 12, dans lequel la partie d'application effectue en outre la comparaison de la liste d'adresses correspondant au premier UE et de la liste d'adresses correspondant à chaque deuxième UE, la détection que le premier UE et chaque deuxième UE sont de domaine différent ; et la détermination qu'un interfonctionnement est nécessaire pour établir l'appel entre le premier UE et chaque deuxième UE par l'intermédiaire d'une passerelle de domaine appropriée.

15. AS selon la revendication 12, dans lequel l'ensemble de règles comprend au moins l'un de : une qualité de service, QoS, et un niveau de coûts.

16. AS selon la revendication 10 ou 12, dans lequel l'AS est une passerelle de sous-système multimédia de protocole Internet, IMS.
